(19) Europäisches Patentamt
European Patent Office
Office européen des brevets

(11) **EP 4 372 856 A1**

(12) **EUROPEAN PATENT APPLICATION**

(43) Date of publication:
**22.05.2024 Bulletin 2024/21**

(21) Application number: **23170594.8**

(22) Date of filing: **28.04.2023**

(51) International Patent Classification (IPC):
*H01M 10/04* (2006.01)    *H01M 50/103* (2021.01)
*H01M 50/119* (2021.01)    *H01M 50/133* (2021.01)
*H01M 50/148* (2021.01)    *H01M 50/15* (2021.01)
*H01M 50/169* (2021.01)    *H01M 50/471* (2021.01)

(52) Cooperative Patent Classification (CPC):
**H01M 50/103; H01M 10/0468; H01M 10/0481;
H01M 50/119; H01M 50/133; H01M 50/148;
H01M 50/15; H01M 50/169; H01M 50/471;
Y02E 60/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 CN 202211449280**

(71) Applicant: **CALB Group Co., Ltd.
Changzhou City, Jiangsu Province (CN)**

(72) Inventors:
• QIAO, Zhi
  **Changzhou City, Jiangsu Province (CN)**
• XU, Jiuling
  **Changzhou City, Jiangsu Province (CN)**
• ZHANG, Lulu
  **Changzhou City, Jiangsu Province (CN)**

(74) Representative: **Becker, Eberhard
Becker Kurig & Partner
Patentanwälte mbB
Bavariastraße 7
80336 München (DE)**

(54) **BATTERY**

(57) A provided battery includes a housing (100), which includes a cover plate (120) and a housing member (110), the housing member (110) is provided with a groove for accommodating the cell (300), and the cover plate (120) is fastened to the open end of the groove to seal the cell (300); the housing (100) is provided with a welding surface on the outer surface of the housing member (110) and/or the cover plate (120); a support member (200), which is disposed in the groove and abuts against the housing (100), and at least part of the welding surface is disposed on the surface of the housing (100) parallel to the support member (200).

FIG. 2

**Description**

BACKGROUND

Technical Field

The present disclosure relates to the technical field of batteries, in particular to a battery.

Description of Related Art

In existing battery, the design of flange structure is no longer adopted because the design makes it difficult to assemble the housing member and the cover plate, and the adhering area between the housing member and the cover plate is small and unable to serve the supporting function. Moreover, since the inner side of the housing member is a side surface of a cell, and the side surface of the cell is a soft diaphragm layer, which is also unable to provide sufficient support, making it difficult to effectively fix the housing member and resulting in increased difficulty of welding.

Therefore, how to improve the welding strength and welding accuracy of the cover plate and the housing is a technical problem that needs to be solved urgently.

SUMMARY

In a first aspect of the present disclosure, a battery is provided and includes: a housing, which includes a cover plate and a housing member, the housing member is provided with a groove for accommodating the cell, and the cover plate is fastened to the open end of the groove to seal the cell; the housing is provided with a welding surface on the outer surface of the housing member and/or the cover plate; a support member, which is disposed in the groove and abuts against the housing, and at least part of the welding surface is disposed on the surface of the housing parallel to the support member.

BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.

FIG. 1 is a schematic structural view of a battery in an embodiment of the present disclosure.
FIG. 2 is a cross-sectional view of a plane M in FIG. 1.
FIG. 3 is a schematic structural view of a part of the structure in FIG. 2.
FIG. 4 is another schematic structural view of a part of the structure in FIG. 2.
FIG. 5 is a second schematic structural view of the housing in FIG. 1.
FIG. 6 is a third schematic structural view of the housing in FIG. 1.

DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

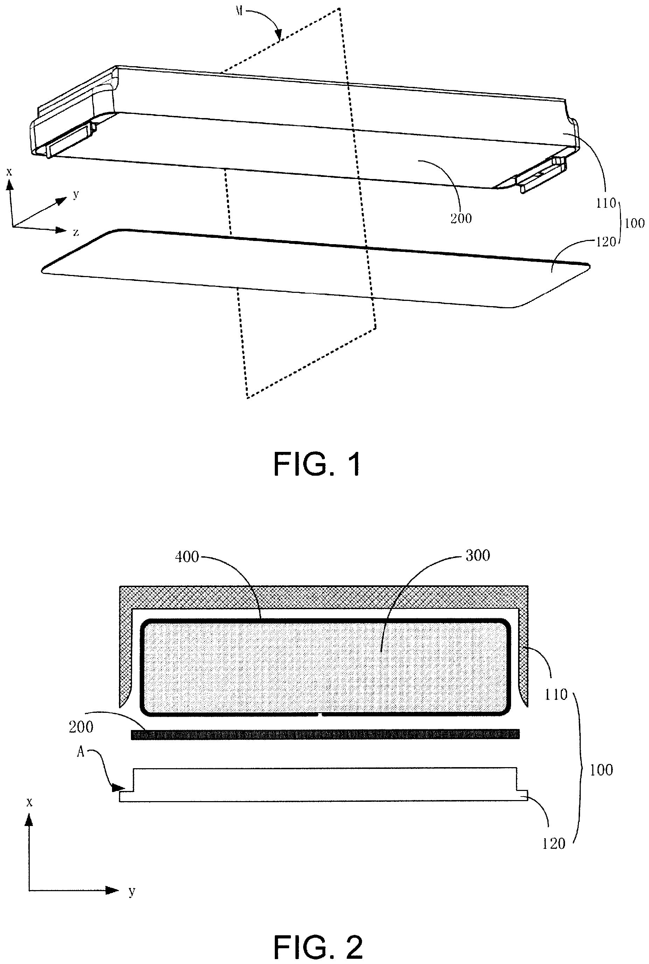

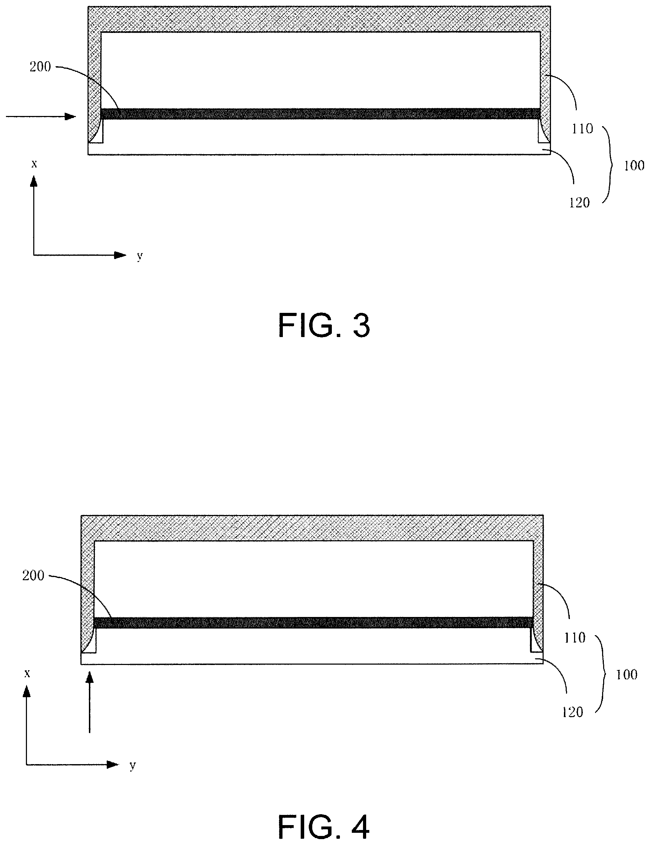

An embodiment of the present disclosure provides a battery. FIG. 1 is a schematic structural view of a battery in an embodiment of the present disclosure. FIG. 2 is a cross-sectional view of a plane M in FIG. 1. FIG. 3 is a schematic structural view of a part of the structure in FIG. 2. Please refer to the structures shown in FIG. 1 to FIG. 3, the battery in the embodiment of the present disclosure includes: a housing 100, which includes a cover plate 120 and a housing member 110, the housing member 110 is provided with a groove for accommodating a cell 300, and the cover plate 120 is fastened to the open end of the groove to seal the cell 300; the housing 100 is provided with a welding surface on the outer surface of the housing member 110 and/or the cover plate 120; a support member 200, which is disposed in the groove and abuts against the housing 100, and at least part of the welding surface is disposed on the surface of the housing 100 parallel to the support member 200.

It should be noted that when preparing the battery provided by this disclosure, a welding device may be used to perform welding on the welding surface to fix the relative positions of the cover plate 120 and the housing member 110, so that the cover plate 120 is fastened to the open end of the groove and seals the cell 300 in the groove. Specifically, when the welding device performs welding on the cover plate 120 and the housing member 110, the welding head performs welding on the welding surface formed on the outer surface of the housing member 110 and/or the welding surface formed on the outer surface of the cover plate 120. Because at least part of the welding surface is set on a surface of the housing 100 parallel to the support member 200, and the support member 200 is disposed in the groove and abuts against the housing 100, the support member 200 is able to provide sufficient supporting force when the cover plate 120 and the housing member 110 are welded and positioned, so as to facilitate welding positioning and reduce difficulty of welding.

In the meantime, since the support member 200 is able to provide sufficient supporting force, the welding head is able to continuously and effectively weld the housing member 110 and the cover plate 120 during the welding process, so as to effectively fix the relative positions of the housing member 110 and the cover plate 120 and improve welding strength and welding accuracy of the cover plate 120 and the housing member 110.

Please continue to refer to the structure shown in FIG. 1. In order to facilitate understanding of the battery provided in the embodiment of the present disclosure, the length direction of the battery is set to be parallel to the direction z, the width direction of the battery is parallel to the direction y, and the thickness direction of the battery is parallel to the direction x, and x, y, and z are perpendicular to one another. It should be understood that x, y, and z only serve to indicate different directions in an exemplary sense. Of course, directions may also be described in different ways, such as the first direction, the second direction, and the third direction, and details are not repeated here.

When welding the housing member 110 and the cover plate 120, different welding methods and different welding positions may be adopted for welding. As shown in FIG. 3, the direction indicated by the arrow in FIG. 3 illustrates the welding direction of the welding head. It should be understood that the welding head in FIG. 3 performs welding operation from the housing member 110. Specifically, when the welding head is utilized to perform welding from the housing member 110, the outer side surface of the housing member 110 forms the welding surface.

It should be noted that, as shown in FIG. 3, when the welding head performs welding from the outer side surface of the housing member 110, the support member 200 is able to support the housing member 110 in the direction y. Specifically, when the welding head performs welding on the welding surface in the direction indicated by the arrow in FIG. 3, the support member 200 is able to provide support at the position of contacting the housing member 110. Under the circumstances, the supporting force is applied in a direction opposite to the arrow, so that sufficient supporting force is provided when the cover plate 120 and housing member 110 are welded and positioned, thereby facilitating welding positioning and reduce difficulty of welding. It should be understood that, since at least part of the welding surface is parallel to the support member 200, the part of the welding surface parallel to the support member 200 may be slightly deformed by the welding head to abut against the support member 200.

As shown in FIG. 4, the direction indicated by the arrow in FIG. 4 illustrates the welding direction of the welding head. It should be understood that the welding head in FIG. 4 performs welding operation from the cover plate 120. Specifically, when using a welding head to perform welding from the cover plate 120, the outer side surface of the cover plate 120 forms the welding surface.

It should be noted that, as shown in FIG. 4, when the welding head performs welding from the outer side surface of the cover plate 120, the support member 200 may support the cover plate 120 in the direction x. Specifically, when the welding head performs welding on the welding surface in the direction indicated by the arrow in FIG. 4, the support member 200 may provide support at the position of contacting the cover plate 120. The supporting force is applied in a direction opposite to the direction of the arrow, so that sufficient supporting force is provided when the cover plate 120 and the housing member 110 are welded and positioned to facilitate welding positioning and reduce difficulty of welding.

Certainly, the welding positions shown in FIG. 3 and FIG. 4 may also be used simultaneously for welding operation to improve the welding effect on the cover plate 120 and the housing member 110, and details will not be repeated here.

When selecting the welding device, there are many possibilities of selection. Exemplarily, a laser welding device may be selected as the welding device. It should be noted that the thickness of the cover plate 120 is generally greater than the thickness of the housing member 110. Therefore, when the welding head performs welding from the cover plate 120, the laser welding device may be adopted to perform penetration welding to weld the cover plate 120 and the housing member 110, so that the welding effect on the cover plate 120 and the housing member 110 may be improved.

Please continue to refer to the structure shown in FIG. 1. The battery is generally in the shape of a cuboid with two large surfaces and four side surfaces. The two large surfaces of the battery are set opposite to each other, and the four side surfaces of the battery specifically include two long side surfaces and two wide side surfaces. Specifically, both the long side surfaces and the wide side surfaces are formed by the housing member 110.

In an embodiment, when the housing member 110 and the cover plate 120 are welded, the support member 200 may support at least one long side surface of the housing member 110 to provide support.

It should be noted that due to the large size of the long side surface, the structural stability of the long side surface is slightly poorer than that of the wide side surface. Using the support member 200 to support the long side surface may overcome the problem of lack of support for fixing during the welding process and reduce difficulty of welding to improve efficiency.

In specific configuration, it may be set that: the support member 200 fully supports the entire long side surface along the direction z, so as to further increase the contact area between the support member 200 and the long side surface, and better improve the welding strength and welding accuracy of the cover plate 120 and the housing member 110.

Of course, it may also be set that: the support member 200 supports a partial region of the long side surface along the direction z. Exemplarily, it may be set that the support member 200 only supports the region near the middle of the long side surface. Alternatively, it may be set that the support member 200 supports the long side surface at intervals along the length direction of the long side surface. The configuration may be set according to requirements, and no further details are incorporated herein.

In another embodiment, when the housing member 110 and the cover plate 120 are welded, the support member 200 may support at least one short side surface of the battery.

It should be noted that the support member 200 may provide sufficient supporting force when the cover plate 120 and the housing member 110 are welded and positioned, so as to facilitate the welding and positioning and reduce the difficulty of welding.

In another embodiment, when the housing member 110 and the cover plate 120 are welded, the support member 200 may support at least one short side surface and at least one long side surface of the battery.

It should be noted that, when the cover plate 120 and the housing member 110 are welded and positioned, the support member 200 may provide sufficient supporting force for both the long side surfaces and the short side surfaces, so as to facilitate welding positioning and reduce difficulty of welding.

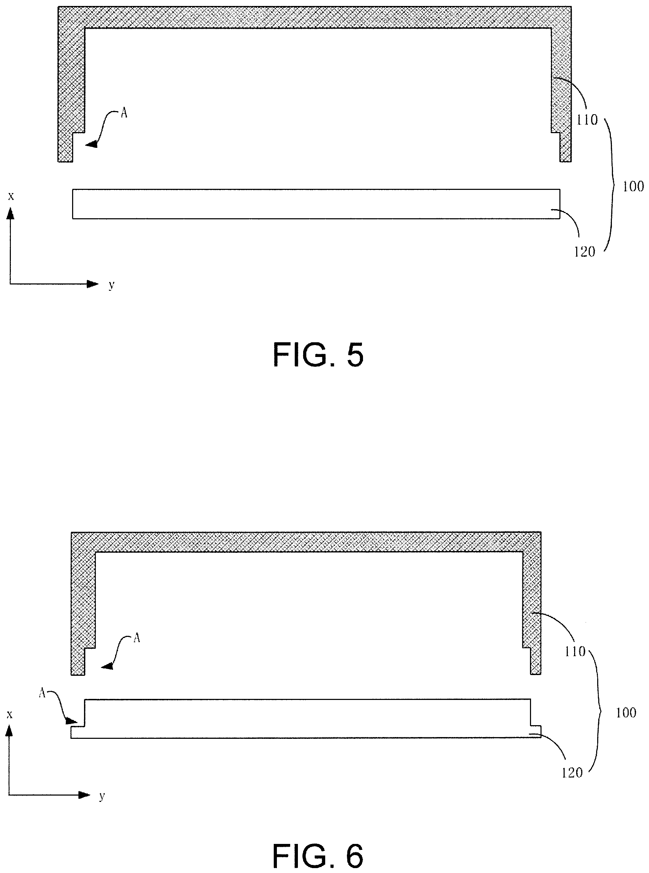

In an embodiment, please refer to the structures shown in FIG. 2 , FIG. 5 and FIG. 6, at least one of the edge of the cover plate 120 for fastening the open end and the edge of the housing member 110 for forming the open end is provided with a step A. The edges of the housing member 110 and the cover plate 120 are overlapped through the step A.

It should be noted that by setting the step A on the edges of the cover plate 120 and/or the housing member 110, the alignment accuracy between the cover plate 120 and the housing member 110 may be further improved. In the meantime, since the housing member 110 and the cover plate 120 are overlapped through the step A, it is possible to avoid relative movement between the housing member 110 and the cover plate 120. The welding may be limited in position by the step A to ensure the stability of the welding.

In an embodiment, please continue to refer to the structure shown in FIG. 2, the edge of the cover plate 120 is provided with a step A, and the step A includes a bottom wall and a side wall. The support member 200 is aligned with the side wall of the step A or exceeds beyond the side wall of the step A.

It should be noted that, as shown in FIG. 3, the edge of the cover plate 120 is provided with a step A, and the edge of the housing member 110 overlaps the bottom wall of the step A. When the support member 200 is aligned with the side wall of the step A or exceeds beyond the side wall of the step A, the support member 200 may effectively support the side wall of the housing member 110 to prevent welding failure or insufficient welding between the housing member 110 and the cover plate 120 due to lack of support.

In addition, it should be noted that since the cover plate 120 is a plate-shaped structure, it is more convenient to form the step A on the edge of the cover plate 120, the difficulty of fabrication may be reduced and the preparation efficiency may be improved. Meanwhile, since the thickness of the cover plate 120 is generally greater than that of the housing member 110, the preparation of the step A will not affect the structural strength of the cover plate 120.

In a specific embodiment, referring to the structure shown in FIG. 2, steps A are provided on the edges at both side of the cover plate 120 along the direction y.

It should be noted that when the edges at both sides of the cover plate 120 are provided with steps A in the direction y, that is, the edge at the long side of the cover plate 120 is provided with step A, since the length of the long side is longer, it is possible to better enhance the alignment accuracy between the cover plate 120 and the housing member 110. In the meantime, since the housing member 110 and the cover plate 120 are overlapped through the step A, it is possible to avoid the relative movement between the housing member 110 and the cover plate 120 along the direction y. The welding may be limited in position by the step A to ensure the stability of the welding.

In another specific embodiment, steps A are provided on the edges at both sides of the cover plate 120 along the direction z.

It should be noted that when the edges at both sides of the cover plate 120 are provided with steps A in the direction z, that is, the edge at the short side of the cover plate 120 is provided with step A, it is possible to enhance the alignment accuracy between the cover plate 120 and the housing member 110. In the meantime, since the housing member 110 and the cover plate 120 are overlapped through the step A, it is possible to avoid the relative movement between the housing member 110 and the cover plate 120 along the direction z. The welding may be limited in position by the step A to ensure the stability of the welding.

In another specific embodiment, in a plane formed in the direction y and the direction z, steps A are provided on the peripheral edges of the cover plate 120.

It should be noted that when steps A are provided on the peripheral edges of the cover plate 120, the edges at the long sides and short sides of the housing member 110 and the cover plate 120 may be aligned to each other to better enhance the alignment accuracy between the cover plate 120 and the housing member 110. In the meantime, since the housing member 110 and the cover plate 120 are overlapped through the step A, it is possible to avoid relative movement between the housing member 110 and the cover plate 120 in the plane formed in the direction y and the direction z. The welding may be limited in position by the step A to ensure the stability of the welding.

In an embodiment, the support member 200 abuts against the side wall of the housing member 110. Exemplarily, please continue to refer to the structure shown in FIG. 3, the support member 200 abuts against the side wall of the housing member 110 along the direction y.

Specifically, when the housing member 110 is welded, the side wall of the housing member 110 is closely attached to the support member 200 near the open end under the clamping action of the tooling. When the housing member 110 is fastened, the support member 200 provides sufficient supporting force for the side wall of the housing member 110 along the direction y, so as to facilitate welding positioning.

It should be noted that, when the support member 200 exceeds beyond the side wall of the step A to some extent, the support member 200 may abut against the side wall of the housing member 110, so as to continuously and effectively support the side wall of the housing member 110 and prevent welding failure or insufficient welding between the housing member 110 and the cover plate 120 due to lack of support. In this way, it is possible to improve the welding strength and welding accuracy of the cover plate 120 and the housing member 110.

In an embodiment, the support member 200 may be specifically configured as an elastic plate, so as to realize the abutting operation between the support member 200 and the housing member 110.

It should be noted that since the support plate is an elastic plate, the hardness of the preparation material of the support plate is low, thereby preventing the support plate from scratching or cutting the housing member 110 from inside of the housing 100, and improving the safety performance of the battery provided in the embodiment of the present disclosure.

In specific configuration of the support member 200, the support member 200 may be set to be exactly in contact with the housing member 110, and the support member 200 may also be set to have a certain amount of compression deformation. The specific configuration may be set according to requirements, and no further details are incorporated herein.

In an embodiment, among the welding surface and the support member 200 arranged in parallel, along the direction perpendicular to the welding surface, the maximum compression amount of the support member 200 is m, the initial dimension of the support member 200 in an uncompressed state is a, and the distance between the two opposite side walls of the housing member 110 is n, and m, a and n satisfy the following formula:

$$n\,(1+m)\,=a.$$

It should be understood that the units of m, n and a are all the same, for example, the units of m, n and a are all millimeters (mm).

It should be noted that by setting m, n and a to satisfy the above relationship, it is possible to prevent the support member 200 from being excessively compressed and excessively supporting the housing member 110, and causing the housing member 110 to be deformed and detached from the position where the housing member 110 is welded with the cover plate 120 due to excessive support. In this way, it is possible to ensure the welding accuracy and yield of housing 100.

In an embodiment, the support member 200 is an insulating plate.

It should be noted that when the support member 200 is an insulating plate, which may electrically insulate and isolate the cell 300 from the metal cover 120 underneath. Since the support member 200 itself is insulating and has a certain thickness, it is possible to effectively prevent the foreign objects inside/outside the housing 100 from piercing the diaphragm of the cell 300 when the foreign objects are squeezed and pressed and causing insulation failure. In this way, it is possible to improve the safety performance and service life of the battery.

It should be noted that the insulating plate is made of insulating material, for example, the insulating material may be polypropylene (PP) or polyethylene (PE). Of course, other insulating materials may also be used to form the insulating plate, and details will not be described here.

It should be noted that, in the battery provided in the embodiment of the present disclosure, the support member 200 may be an elastic plate with insulation performance, that is, the support member 200 has both insulation performance and elastic compression performance.

In an embodiment, the battery provided in the embodiment of the present disclosure further includes a cell 300 (as shown in FIG. 2). The cell 300 is placed in the groove, and the cell 300 has two large surfaces opposite to each other. The support member 200 is disposed between the large surface of the cell and the housing 100.

It should be noted that this arrangement enables the support member 200 to absorb the expansion force of the cell 300 at the large surface of the cell, so as to improve the supporting effect of the support member 200 on the large surface of the cell and the housing 100.

It should be noted that the cell 300 includes a main body portion and a tab portion drawn from the main body portion. The main body portion is formed by stacking or winding electrode sheets. The tab portion may be formed by multiple layers of tabs, and the tab is integrally drawn from the electrode sheet. It should be understood that there are other substances in the housing 100, for example, the housing 100 is filled with an electrolyte solution, which will not be described in detail.

In an embodiment, the thickness of the support member 200 is 0.2mm to 5mm along the direction x.

It should be noted that the support member 200 has a certain thickness in the direction x and has a buffer support function, and therefore is able to absorb and buffer the expansion force from the cell 300, so that the support member 200 may better fit the large surface of the cell 300.

In specific setting of the thickness of the support member 200, the thickness of the support member 200 may be selected from any one of the following values: 0.2mm, 0.25mm, 0.3mm, 0.35mm, 0.4mm, 0.45mm, 0.5mm, 0.55mm, 0.6mm, 0.65mm, 0.7mm, 0.75mm, 0.8mm, 0.85mm, 0.9mm, 0.95mm, 1.0mm, 2.0mm, 3.0mm, 4.0mm, and 5.0mm.

Of course, the thickness of the support member 200 may also be selected from other values, and details will not be described here.

It should be noted that, in specific setting of the support member 200, it may be set that the support member 200 has a certain amount of compression along the direction x. It should be understood that if the compression amount of the support member 200 along the direction x is too large, it will be difficult for the support member 200 to absorb the expansion of the cell 300, and if the compression amount of the support member 200 along the direction x is too small, the support member 200 will occupy a large space inside the battery and affect the overall energy density of the battery.

In an embodiment, please continue to refer to the structure shown in FIG. 2, the battery provided in the embodiment of the present disclosure further includes an insulating film 400 (shown in thick black lines in FIG. 2).

The insulating film 400 is wound and wrapped on the surface of the cell 300; the beginning end and the terminal end of the insulating film 400 are located on one side of the cell 300 close to the cover plate 120.

It should be noted that the edge of the insulating film 400 may be disposed on the surface of the cell 300 close to the support member 200, and there is no need for the insulating film 400 to be arranged in an overlapping manner to avoid low utilization of the internal space of the battery.

Exemplarily, please continue to refer to the structure shown in FIG. 2. It should be understood that, in order to show the beginning end and the terminal end of the insulating film 400, there is a blank region between the beginning end and the terminal end in FIG. 2. Of course, in order to ensure the insulating effect of the insulating film 400 on the cell 300, the beginning end and the terminal end may be set to be exactly in contact without overlapping each other.

In an embodiment, the thickness of the housing member 110 is less than or equal to 0.5mm.

It should be noted that, since the thickness of the housing member 110 is less than or equal to 0.5mm, and the thickness is relatively thin, the support member 200 may provide sufficient supporting force when the cover plate 120 and the housing member 110 are welded and positioned, so as to enhance the welding strength and welding accuracy of the housing member 110 and the cover plate 120.

In an embodiment, the housing 100 is an aluminum housing.

It should be noted that since the housing 100 is made of aluminum, and aluminum is relatively soft, the support member 200 may provide sufficient supporting force when the cover plate 120 and the housing member 110 are welded and positioned to enhance the welding strength and welding accuracy of the housing member 110 and the cover plate 120.

It should be noted that the housing 100 may also be made of other preparation materials, which will not be described in detail.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

**Claims**

1.  A battery, comprising:

a housing (100), which comprises a cover plate (120) and a housing member (110), wherein the housing member (110) is provided with a groove for accommodating a cell (300), and the cover plate (120) is fastened to an open end of the groove to seal the cell (300);

wherein the housing (100) is provided with a welding surface on an outer surface of the housing member (110) and/or the cover plate (120);

a support member (200), which is disposed in the groove and abuts against the housing (100), and at least a part of the welding surface is disposed on a surface of the housing (100) parallel to the support member (200).

2. The battery according to claim 1, wherein at least one of an edge of the cover plate (120) for fastening the open end and an edge of the housing member (110) for forming the open end is provided with a step (A);

wherein the edges of the housing member (110) and the cover plate (120) are overlapped through the step (A).

3. The battery according to claim 2, wherein the edge of the cover plate (120) is provided with the step (A), and the step (A) comprises a bottom wall and a side wall;

wherein the support member (200) is aligned with the side wall of the step (A) or exceeds beyond the side wall of the step (A).

4. The battery according to claim 3, wherein the support member (200) abuts against a side wall of the housing member (110).

5. The battery according to claim 1, wherein the support member (200) is an elastic plate.

6. The battery according to claim 5, wherein among the welding surface and the support member (200) arranged in parallel, along a direction perpendicular to the welding surface, a maximum compression amount of the support member (200) is m, an initial dimension of the support member (200) in an uncompressed state is a, and a distance between the two opposite side walls of the housing member (110) is n, and the m, the a and the n satisfy the following formula:

$$n\,(1+m)\,=a.$$

7. The battery according to claim 1, wherein the support member (200) is an insulating plate.

8. The battery according to claim 1, further comprising a cell (300), which is placed in the groove, and the cell (300) has two large surfaces opposite to each other;

wherein the support member (200) is disposed between the large surface of the cell (300) and the housing (100).

9. The battery according to claim 8, wherein a thickness of the support member (200) is 0.2mm to 5mm along an arrangement direction of the cover plate (120) and the support member (200).

10. The battery according to claim 8, further comprising an insulating film (400), which is wound and wrapped on a surface of the cell (300); wherein a beginning end and a terminal end of the insulating film (400) are located on one side of the cell (300) close to the cover plate (120).

11. The battery according to claim 1, wherein a thickness of the housing member (110) is less than or equal to 0.5mm.

12. The battery according to claim 1, wherein the housing (100) is an aluminum housing.

FIG. 1

FIG. 2

200

110
100
120

x

y

# FIG. 3

200

110
100
120

x

y

# FIG. 4

# FIG. 5

# FIG. 6

Europäisches
Patentamt

European
Patent Office

Office européen
des brevets

**EUROPEAN SEARCH REPORT**

Application Number

EP 23 17 0594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 763 206 A1 (SAMSUNG SDI CO LTD [KR]) 6 August 2014 (2014-08-06) | 1-8,10, 12 | INV. H01M10/04 |
| Y | * paragraphs [0027] - [0047]; figures 2,3 * | 9,11 | H01M50/103 H01M50/119 H01M50/133 |
| X | US 2004/258989 A1 (LEE JIN-UK [KR]) 23 December 2004 (2004-12-23) | 1,7 | H01M50/148 H01M50/15 |
| A | * paragraphs [0021] - [0042]; figures 1-5 * | 2-6,8-12 | H01M50/169 H01M50/471 |
| Y | US 6 190 794 B1 (WYSER PAUL JULIAN [CH]) 20 February 2001 (2001-02-20) | 9 | |
| A | * column 4, lines 49-50; figure 3 * | 1-8, 10-12 | |
| Y | EP 3 174 127 A2 (SAMSUNG SDI CO LTD [KR]) 31 May 2017 (2017-05-31) | 11 | |
| A | * paragraphs [0034] - [0040]; figure 2 * | 1-10,12 | |

TECHNICAL FIELDS
SEARCHED      (IPC)

H01M

The present search report has been drawn up for all claims

| Place of search | Date of completion of the search | Examiner |
|---|---|---|
| Munich | 15 November 2023 | Posch, Patrick |

EPO FORM 1503 03.82 (P04C01)

## ANNEX TO THE EUROPEAN SEARCH REPORT
## ON EUROPEAN PATENT APPLICATION NO.

EP 23 17 0594

This annex lists the patent family members relating to the patent documents cited in  the above-mentioned European search report.
The members are as contained in the European Patent Office EDP file on
The European Patent Office is in no way liable for these particulars which are merely given for the purpose of information.

15-11-2023

| Patent document cited in search report | | | Publication date | Patent family member(s) | | | Publication date |
|---|---|---|---|---|---|---|---|
| EP 2763206 | A1 | | 06-08-2014 | CN | 103972433 | A | 06-08-2014 |
| | | | | EP | 2763206 | A1 | 06-08-2014 |
| | | | | JP | 6319831 | B2 | 09-05-2018 |
| | | | | JP | 2014154548 | A | 25-08-2014 |
| | | | | KR | 20140100004 | A | 14-08-2014 |
| | | | | US | 2014220424 | A1 | 07-08-2014 |
| US 2004258989 | A1 | | 23-12-2004 | CN | 1574418 | A | 02-02-2005 |
| | | | | JP | 2005011813 | A | 13-01-2005 |
| | | | | KR | 20040110599 | A | 31-12-2004 |
| | | | | US | 2004258989 | A1 | 23-12-2004 |
| US 6190794 | B1 | | 20-02-2001 | DE | 69815810 | T2 | 13-05-2004 |
| | | | | EP | 0948072 | A1 | 06-10-1999 |
| | | | | ES | 2202675 | T3 | 01-04-2004 |
| | | | | JP | 2000077039 | A | 14-03-2000 |
| | | | | US | 6190794 | B1 | 20-02-2001 |
| EP 3174127 | A2 | | 31-05-2017 | CN | 106784435 | A | 31-05-2017 |
| | | | | EP | 3174127 | A2 | 31-05-2017 |
| | | | | KR | 20170060445 | A | 01-06-2017 |
| | | | | US | 2017149023 | A1 | 25-05-2017 |

EPO FORM P0459

For more details about this annex : see Official Journal of the European Patent Office, No. 12/82